# EUROPÄISCHE PATENTSCHRIFT

(11) **EP 0 632 872 B1**
(45) Veröffentlichungstag und Bekanntmachung des Hinweises auf die Patenterteilung: **03.07.1996**
(21) Anmeldenummer: 94903717.0
(22) Anmeldetag: 18.01.1994
(51) Int. Cl.: F16L 37/38

(54) **STECKBARE SICHERHEITSKUPPLUNG FÜR DRUCKLEITUNGEN**
INSERTABLE TYPE SAFETY COUPLING FOR PRESSURE PIPES
ACCOUPLEMENT DE SECURITE EMMANCHABLE POUR CONDUITES SOUS PRESSION

(30) Priorität: 22.01.1993 CH 191/93; 19.04.1993 CH 1192/93
(43) Veröffentlichungstag der Anmeldung: 11.01.1995
(73) Patentinhaber: Hans Oetiker AG Maschinen- und Apparatefabrik, CH-8812 Horgen (CH)
(72) Erfinder: Wuethrich, Albrecht, CH-6110 Wolhusen (CH)
(74) Vertreter: Felber, Josef
(86) Internationale Anmeldenummer: CH9400008
(87) Internationale Veröffentlichungsnummer: WO9417322

(56) Entgegenhaltungen:
- WO-A-89/07222
- WO-A-93/24781
- DE-U- 8 711 334
- GB-A- 1 503 647

## Beschreibung

Die vorliegende Erfindung betrifft eine steckbare Sicherheitskupplung für Leitungen von Druckmedien, die grundsätzlicn aus einer Kupplungsdose mit einem darin schwenkbar gelagerten Sperrorgan besteht, welches als Kupplungsbuchse ausgebildet ist, und einem zu dieser Kupplungsbuchse gehörenden Kupplungsstecker, wobei als Druckmedien sowohl komprimierbare als auch nicht komprimierbare, fliessfähige Medien in Betracht kommen.

Herkömmliche Kupplungen für Druckleitungen bestehen ganz allgemein aus einem Kupplungsstecker und einer Kupplungsbuchse, sowie einem Mechanismus zum Verriegeln der Kupplung in Leitungslage, durch welchen die Buchse und der Stecker zusammengehalten wird, und weiter einer Sperrvorrichtung, die das Ausfliessen bzw. das Ausströmen des unter Druck stehenden Mediums bei gelöster Kupplung unterbindet. Beim Einstecken des Kupplungssteckers in die Buchse wird die Sperrfunktion der Kupplung gelöst und das Medium kann durch die Kupplung hindurchströmen. Wird die Kupplung gelöst, so wird auch der Durchfluss wieder unterbrochen.

Bei der besonderen, hier interessierenden Art von Kupplung für Druckleitungen dient ein schwenkbares Sperrorgan als Kupplungsbuchse, welches im entkuppelten Zustand der Kupplung geschwenkt ist und in dieser Lage den Durchfluss sperrt. Der Kupplungsstecker kann somit drucklos unter einem schiefen Winkel zur Druckleitung in dieses in einem Kupplungsgehäuse schwenkbar gelagerte Sperrorgan gesteckt werden. Durch Schwenken des Kupplungssteckers und damit des Sperrorgans im Kupplungsgehäuse wird die Kupplung in eine lineare und leitende Lage gebracht. Sobald der Stecker die lineare Lage erreicht hat, wird er in dieser Lage gesichert, indem er durch den in der Druckleitung herrschenden Druck etwas aus der Buchse heraus in eine Ausnehmung im Kupplungsgehäuse gedrückt wird, wodurch eine Verriegelung erzielt wird und der Stecker somit nicht mehr geschwenkt werden kann. Beim Entriegeln einer solchen Kupplung mit schwenkbarem Sperrorgan muss der Kupplungsstecker gegen den Leitungsdruck aus der Ausnehmung im Kupplungsgehäuse heraus gegen die Kupplungsbuchse hin gedrückt und anschliessend geschwenkt werden, wodurch der durchfluss wiederum gesperrt wird. In der Schwenklage wird über eine Entlastungsöffnung im Kupplungsgehäuse ein Druckausgleich zwischen dem zu lösenden Kupplungsstecker und der Umgebung erzielt. Anschliessend kann der Stecker drucklos aus der Buchse gezogen werden, weil im Innern des Steckers bzw. der Bucnse der Überdruck gegenüber der Umgebung bereits abgebaut ist. Im Vergleich zu vielen verbreiteten Kupplungen, bei denen der Stecker beim Entkupplen unter dem noch herrschenden Druck im Stecker aus der Buchse geschleudert werden kann, sind solche Kupplungen in der Handhabung grundsätzlich sicher und helfen daher mit, Unfälle zu verhüten.

Ein wesentliches Problem, welches die weitere Verbreitung solcher Kupplungen mit schwenkbarem Sperrorgan hindert und deren Einsatzbereich einschränkt, ist die Tatsache, dass beim Entkuppeln des Steckers dieser zum Entriegeln vorerst gegen den Leitungsdruck etwas in die Kupplungsbuchse gestossen werden muss, bevor er geschwenkt werden kann. Dieses Stossen des Steckers gegen den Leitungsdruck erfordert bei Kupplungen grösserer Dimensionen sowie bei Kupplungen für höhere Leitungsdrucke einen beträchlichen Kraftaufwand, welcher die Bedienung der Kupplung erschwert oder für gewisse Personen gar verunmöglicht.

Ein anderer Grund dafür, dass sich solche Kupplungen trotz ihrer Sicherheitsvorteile noch nicht weiter durchgesetzt haben, liegt in der Tatsache, dass es eine Vielzahl von Norm-Steckern für Kupplungen von Druckleitungen gibt, die sich in ihrer geometrischen Bauform unterscheiden, und die bei den Anwendern stark verbreitet sind. Daher kann ein bestimmter Stecker jeweils nur mit einer entsprechend passenden Kupplungsbuchse verwendet werden. Da bei den hier betrachteten Kupplungen mit schwenkbarem Sperrorgan das Sperrorgan selbst die Kupplungsbuchse bildet, benötigt man bei solchen Kupplungen für jeden Steckertyp ein dem Stecker angepasstes Sperrorgan. Will man einen anderen Steckertyp verwenden, so ist man gezwungen, die vorhandene Kupplungsdose gegen eine solche mit entsprechendem Sperrorgan zu ersetzen, oder wie es in manchen Fällen möglich ist, ein dem Kupplungsstecker entsprechendes Sperrorgan in das Gehäuse der vorhandenen Kupplungsdose einzubauen. Es wäre aber viel zu teuer, eine Vielzahl unterschiedlicher Sperrorgane zu bauen, welche an die verschiedenen vorhandenen Steckertypen angepasst wären. Diese Sperrorgane werden nämlich mittels Dreh- und Fräsautomaten hergestellt und sollten in einer möglichst grossen und unveränderten Serie gebaut werden können, um deren Preis tief zu halten.

Es ist daher die Aufgabe der vorliegenden Erfindung, eine steckbare Kupplung mit schwenkbarem Sperrorgan zu schaffen, die einerseits ohne grossen Kraftaufwand bequem und drucklos entkuppelbar ist, und die andrerseits ein Sperrorgan aufweist, welches einfach und preisgünstig an beliebige Bauarten eines Kupplungssteckers adaptierbar ist und somit zusammen mit den bereits in grosser Zahl im Einsatz stehenden verschiedenen Norm-Steckern verwendbar ist.

Diese Aufgabe löst eine steckbare Sicherheitskupplung für Druckleitungen mit einer Kupplungsdose mit darin schwenkbar gelagertem Sperrorgan, welches eine diametrale durchgehende Bohrung aufweist, und darin einsteckbarem Stecker zum drucklosen Kuppeln und Entkuppeln, das sich dadurch auszeichnet, dass das Sperrorgan wenigstens in der Leitungslage mittels mindestens eines verschiebbaren Bolzens oder Nockens gegen eine Verschwenkung sicherbar ist, welcher Bolzen oder Nocken in Sperrlage in eine Bohrung oder Ausnehmung im Sperrorgan eingreift, ferner dass das Sperrorgan eine senkrecht zu seiner Schwenkachse verlaufende, um seine durchgehende Bohrung angeordnete Ausnehmung aufweist, in welche ein Adapter mit durchgehender Bohrung formschlüssig und dichtend eingesetzt ist, wobei dessen Inneres als Steckerbuchse für den einzusteckenden Stecker ausgebildet ist.

Unterschiedliche Ausführungen der erfindungsgemässen Sicherheitskupplung mit schwenkbarem Sperrorgan mit einem solchen Verriegelungsmechanismus und einem solchen Adapter gehen aus den abhängigen Ansprüchen hervor und ihr jeweiliger Aufbau wird in der nachfolgenden Beschreibung anhand der Zeichnungen erläutert.

Der Verriegelungsmechanismus mit dem oder den verschiebbaren Nocken oder Bolzen kann in verschiedener Weise ausgeführt sein, wobei hier eine besonders elegante Variante gezeigt wird. Andererseits kommen auch sowohl für das Sperrorgan als auch für den Adapter, der in das Sperrorgan eingesetzt ist, unterschiedliche Bauformen in Frage. So kann das Sperrorgan zylindrisch, kugelförmig aber auch zum Beispiel konisch sein. Ebenso können die äusseren geometrischen Formen des Adapters verschiedenartig sein, zum Beispiel zylindrisch, kubisch, oder sie können auch einen elliptischen Querschnitt aufweisen. In den Zeichnungen sind bevorzugte Ausführungen von Sperrorganen und Adaptern dargestellt.

Es zeigt:
- Figur 1:: Eine Kupplungsdose mit schwenkbarem Sperrorgan, Adapter und zugehörigem Stecker sowie mit einem Verriegelungsmechanismus bestehend aus einem axial verschiebbaren Ring mit Randnocken, die in das Sperrorgan eingreifen;
- Figur 2:: Die Kupplungselemente Kupplungsdose mit Gehäuse und darin eingebautem Sperrorgan und Dichtung einerseits, einen Adapter und dessen Befestigungsschraube und einen Stecker andrerseits in einer perspektivischen Darstellung nebeneinander gezeigt;
- Figur 3:: Ein Sperrorgan und einen Adapter in einer Schnittzeichnung dargestellt;
- Figur 4:: Einen Adapter mit einer Führung für den Kupplungsstecker;
- Figur 5:: Eine weitere Ausführung eines Sperrorgans mit Adapter;
- Figur 6:: Einen Adapter für eine besondere Konfiguration von Stecker und Buchse;
- Figur 7:: Einen Adapter für einen kurzen Stecker;
- Figur 8:: Einen Adapter mit einer Spannzange für einen direkten Schlauchanschluss.

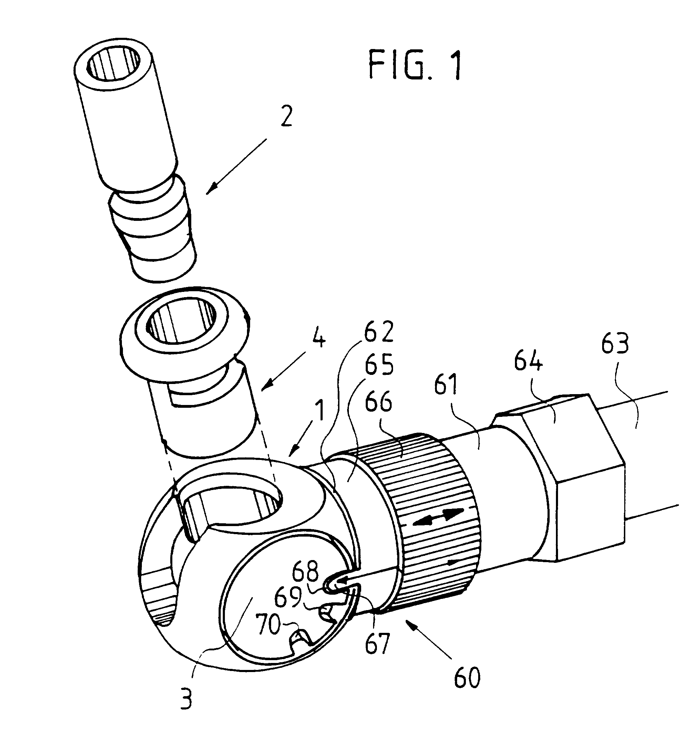

Figur 1 zeigt eine besonders elegante, weil einfache Ausführung der Erfindung, wobei hier die einzelnen Elemente der Kupplung in teilweise auseinandergebautem Zustand gezeigt sind. Diese Variante einer Kupplung besteht aus einer Kupplungsdose mit Gehäuse 1, in dem ein schwenkbares Sperrorgan 3 angeordnet ist. Dieses hier zylindrische Sperrorgan 3 weist eine bezüglich seiner Schwenkachse im rechten Winkel verlaufende, das Sperrorgan diametral durchsetzende Bohrung auf. Die Bohrung ist im hier einsehbaren Bereich auf einen grösseren Durchmesser aufgebohrt, sodass eine Ausnehmung gebildet wird, in welche ein Adapter 4 genau einpasst. Der Adpater 4 bildet mit seiner inneren Form eine Steckerbuchse, welche an einen ganz bestimmten Steckertyp angepasst ist. Der zugehörige Stecker 2 ist über dem Adapter 4 dargestellt. Der Adapter 4 ist gegenüber der Ausnehmung im Sperrorgan abgedichtet, wie das später noch im einzelnen beschrieben wird. Für andere Steckertypen können entsprechend angepasste andere Adapter in das Sperrorgan eingesetzt werden, sodass die Kupplung mit Sperrorgan 3 mit Ausnahme eben des Adapters 4 universell für verschiedenste Steckertypen einsetzbar ist. Als nächstes wird der Verriegelungsmechanisums im einzelnen beschrieben. Dieser Verriegelungsmechanismus hat eine ganz zentrale Bedeutung. Er muss sicherstellen, dass die Kupplung im zusammengekuppelten Zustand, also wenn der Stecker in der Kupplungsdose einsteckt und in die Leitungslage geschwenkt ist, sich unter keinen Umständen unkontrolliert aus der Kupplungsdose lösen kann. Während hierzu bei den herkömmlichen Kupplungen mit schwenkbaren Sperrorganen der Stecker in Leitungslage unter dem herrschenden Leitungsdruck geringfügig aus der Kupplungsdose gepresst wurde und so in eine im Innern der Kupplungsdose vorhandene passgenaue Ausnehmung geschoben wurde, sodass er nicht mehr geschwenkt werden konnte, bleibt der Stecker bei der hier gezeigten Ausführung in der Kupplungsdose in Leitungslage unverschoben. Die Schwenkung des Sperrorganes wird nämlich erfindungsgemäss dadurch verhindert, dass das Sperrorgan wenigstens in der Leitungslage mittels mindestens eines Bolzens oder Nockens gegen eine Verschwenkung gesichert wird. Dieser Bolzen oder Nocken ist dabei verschiebbar an der Kupplungsdose geführt und greift in Sperrlage in eine Bohrung oder Ausnehmung im Sperrorgan ein. Im hier gezeigten Beispiel wird dies mit einem Ring 60 realisiert, welcher hinter dem Kupplungsgehäuse 1 axial verschiebbar auf dem Nippel 61 sitzt, welcher zum Kupplungsgehäuse 1 gewissermassen einen Hals bildet und mittels dessen die Kupplungsdose mit der Druckleitung 63 verschraubt wird. Der Nippel 61 kann an seinem Ende eine Muffe 64 tragen, damit die Kupplung auf das Aussengewinde einer Druckleitung 63 aufschraubbar ist. Er Kann aber umgekehrt auch direkt mit seinem Aussengewinde in eine Endmuffe einer Druckleitung geschraubt werden. Der Ring 60 weist hier zwei Bereich 65,66 mit unterschiedlichem Durchmesser auf. Der Bereich 66 mit grösserem Durchmesser weist eine geriffelte oder randierte Oberfläche auf, damit er rutschfest ergreifbar ist. Der Bereich 65 mit kleinerem Durchmesser weist an seinem dem Kupplungsgehäuse 1 zugewandten Rand 62 zwei den Rand 62 überragende Nocken 67 auf. Der Ring 60 ist auf dem Nippel 61 axial verschiebbar, wobei er federbelastet gegen das Kupplungsgehäuse 1 hin gedrückt wird. Auf der Innenseite des Ringes 60 sowie auf der Aussenseite des Nippels 61 ist je eine Schulter gebildet. Zwischen diesen Schultern ist eine Druckfeder eingelegt, deren Windungen um den Nippel 61 geführt sind. Diese Druckfeder erzeugt die Kraft, welche den Ring 60 stets in Richtung hin zur Kupplungsdose 1 schiebt. Er kann jedoch von Hand mit Leichtigkeit gegen die Federkraft nach hinten geschoben werden. Im Kupplungsgehäuse 1 sind gegenüber den Nocken 67 auf dem Ringrand 62 Ausnehmungen vorhanden, in welche die Nocken 67 des Ringrandes 62 eingreifen können. Gleichzeitig weist das hier zylindrische Sperrorgan 3 über einen Bereich seines Umfanges verteilt radiale Bohrungen 68,69,70 auf, in welche die Nocken 67 je nach Schwenklage des Sperrorgans 3 eingreifen können und es so in der jeweiligen Lage arretieren. In der in Figur 1 gezeigten Lage ist die Kupplung in Stecklage gezeigt, also im Zustand, in welchem der Stecker 2 in das Sperrorgan 3 hineingesteckt beziehungsweise herausgezogen werden kann. Um den Stecker 2 einzukuppeln, wird dieser in die Kupplungsdose 1 gesteckt. Danach wird der Ring 60 zurückgeschoben, wobei die Nocken 67 aus den Bohrungen 68 beidseits des Sperrorganes 3 herausgezogen werden, wonach das Sperrorgan 3 im Kupplungsgehäuse 1 schwenkbar ist. Jetzt wird der Stecker 2 in die Leitungslage geschwenkt und dann wird der Ring 60 losgelassen. Unter der auf ihn wirkenden Federkraft wird er gegen das Kupplungsgehäuse 1 hin geschoben und die Nocken 67 rasten in die Bohrungen 70 ein. Damit ist die Kupplung sicher verriegelt. Das Entkuppeln erfolgt, indem zuerst der Ring 60 gegen die Federkraft zurückgeschoben wird, wodurch die Nocken 67 aus den Bohrungen 70 gezogen werden und so das Sperrorgan 3 zum Schwenken freigeben. Danach kann der Stecker 2 aus der Leitungslage geschwenkt werden und überstreicht dabei eine das Kupplungsgehäuse 1 durchsetzende Entlastungsbohrung. Wenn die durchgehende Bohrung im Sperrorgan 3 dieser Entlastungsbohrung gegenüberliegt, rasten die Nocken 67, wenn der Ring 60 losgelassen wird, in die Bohrungen 69 im Sperrorgan 3 ein. Das Steckerinnere wird in dieser Lage vollständig von Druck entlastet. Danach kann der Ring 60 erneut zurückgeschoben werden und der Stecker 2 vollends in die Stecklage zurückgeschwenkt werden, in welcher die Nocken 67 abermals in die Bohrungen 68 einrasten und das Sperrorgan 3 in dieser Stecklage festhalten. Der Stecker 2 kann sodann drucklos herausgezogen werden. Das Sperrorgan 3 ist bei Nichtbenützung der Kupplungsdose 1 ausserdem vor einer ungewollten Verschwenkung gesichert.

Selbstverständlich kann dieser Verriegelungsmechanismus auf mancherlei ähnliche Weise realisiert werden. So können zum Beispiel die Nocken 67 nicht einsehbar ausgeführt werden, indem sie auf der inneren Seite des Ringes 60 längs des Nippels 61 verlaufen und von einem Mantel verdeckt sind. Statt derartiger Nocken 67 können auch ein oder mehrere Bolzen dieselbe Aufgabe erfüllen. So ein Bolzen kann auf dem Nippel in axialer Richtung zu demselben verschiebbar und federbelastet gelagert sein und durch eine entsprechende Bohrung im Kupplungsgehäuse in entsprechende Bohrungen im Sperrorgan 3 eingreifen.

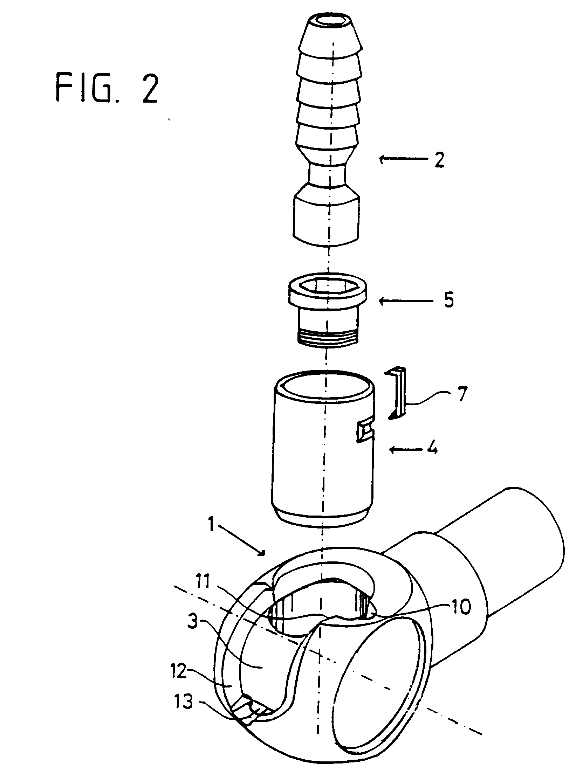

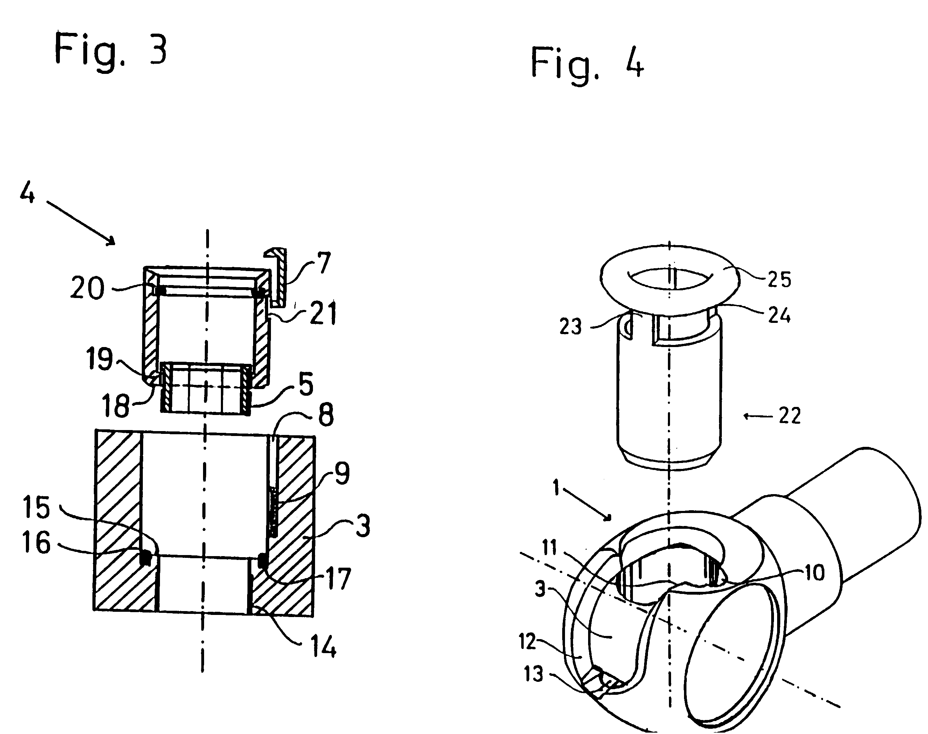

Figur 2 zeigt weitere Merkmale einer Kupplung mit Adpaterstücken für das einstückige Sperrorgan 3. Dieses ist im Gehäuse 1 mittels eines Dichtungselementes dichtend gegenüber der Druckleitung gelagert. Um die Kupplungsdose universal an beliebige Steckertypen adaptieren zu können, kommt erfindungsgemäss ein Adapter 4 zum Einsatz. Dieser Adapter 4 ist in einer entsprechenden Ausnehmung im Sperrorgan 3 dichtend eingesetzt und mittels eines Gewindenippels 5 mit Imbus-Sechskant darin befestigt. Die Innenform des Adapters bildet die jeweils passende Buchse zum jeweiligen Norm-Steckertyp. So kann je nach Steckertyp der geeignete Adapter eingesetzt werden, womit die Kupplungsdose universal einsetzbar wird. Die Form und die Funktion des Adapters 4 wird anhand der Figur 3 noch im einzelnen beschrieben. Ein Stift 7, der im Sperrorgan 3 in einer Ausnehmung federnd eingesetzt ist, verhindert in dieser Ausführung anstelle des Ringes 60 mit den Nocken 67 oder eines oder mehrerer Bolzen ein Schwenken des Sperrorgans 3 ohne eingesteckten Kupplungsstecker 2. Durch eine Druckfeder wird der Stift 7 mit seinem Kopf nach oben in eine Ausnehmung 10 im Gehäuse 1 gedrückt. Versucht man das Sperrorgan 3 zu schwenken, so steht der Stift 7 am Gehäuserand 11 an. Beim Einstecken des Kupplungssteckers 2 in die Kupplungsbuchse, welche ja vom Adapterinneren gebildet wird, wird der Stift 7 soweit unter den Rand 11 des Kupplungsgehäuses 1 gedrückt, dass das Sperrorgan 3 ungehindert geschwenkt werden kann.

Durch Einstecken des Kupplungssteckers 2 in den Adapter 4 und durch Schwenken des Sperrorgans 3 kann die Kupplung von einer sperrenden Lage in eine leitende Lage gebracht werden. Sobald der Stecker 2 die lineare Lage erreicht hat, wird er durch den in der Druckleitung herrschenden Druck in eine Ausnehmung 12 im Kupplungsgehäuse 1 gedrückt und rastet in dieser Position ein. Der Kupplungsstecker 2 kann so nicht mehr geschwenkt werden und die Kupplung ist somit verriegelt. Zum Entriegeln muss der Stecker 2 in den Adapter 4 gedrückt werden. Beim anschliessenden Schwenken des Kupplungssteckers 2 wird das Sperrorgan 3 wiederum in die sperrende Lage gebracht. Dabei überstreicht das Sperrorgan 3 eine Entlastungsöffnung 13, durch die ein Druckausgleich zwischen der Umgebung und dem Inneren des Adapters 4, also der Kupplungsbuchse, hergestellt wird. Danach kann der Kupplungsstecker 2 drucklos aus dem Adapter 4 gezogen werden.

Figur 3 zeigt einen Schnitt durch einen Adapter 4 und durch ein Sperrorgan 3, in das der Adapter 4 eingesetzt werden kann. Das hier zylindrische Sperrorgan 3 weist zwei zentrische, hintereinander liegende Bohrungen auf, die senkrecht zu seiner Schwenkachse angeordnet sind. Die grössere Bohrung hat eine lichte Weite, die dem Aussendurchmesser des Adapters 4 entspricht. Die zentrisch zur ersten Bohrung anschliessende kleinere Bohrung durchsticht den Zylinder. Diese Bohrung ist mit einem Gewinde 14 versehen, welches die Aufgabe hat, die einen Gewindenippel 5 aufzunehmen, um damit den Adapter 4 im Sperrorgan 3 zu befestigen. In dem kreisringförmigen Absatz 15, der sich beim Übergang der grossen Bohrung zu der kleineren zentrischen Bohrung ergibt, ist eine Ringnut 17 mit einem Aussendurchmesser eingelassen, welcher der grossen Bohrung entspricht. In diese Ringnut 17 ist ein Dichtungselement 16 eingelegt. Der eingesetzte Adapter 4 sitzt mit seiner unteren Abschlussfläche 18 dichtend auf dem Absatz 15 und dem Dichtungselement 16. Die Öffnung des Adapters 4 an der unteren Abschlussfläche 18 ist geringfügig kleiner als die obere Adapteröffnung. Durch die unterschiedlichen Öffnungsradien ergibt sich eine Schulter 19, auf welcher der Gewindenippel 5 aufliegt. Die innere Öffnung des Gewindenippels 5 ist so gewählt, dass sie dem Innendurchmesser des einzusetzenden Steckers entspricht. Damit wird gewährleistet, dass es an der Kupplungsstelle keine Verengung im Durchflussquerschnitt gibt. Im Inneren des Adapters 4 befindet sich unmittelbar unter der oberen Öffnung ein ringförmiges Dichtungselement 20. Dieses Dichtungselement 20 umschliesst dichtend den in den Adapter 4 eingesteckten Kupplungsstecker. Der Stift 7, der im Sperrorgan 3 in der Ausnehmung 8 federnd eingesetzt ist, greift in eine Kerbe 21 im Adapter 4 ein und wird von der Feder 9 nach oben gedrückt.

Die Figur 4 zeigt eine andere Ausführung eines Adapters 22. Dabei ist der Teil des Adapters 22, der im Sperrorgan 3 sitzt, gleich dem in Figur 2 und 3 beschriebenen Adapter 4. Der hier gezeigte Adapter 22 unterscheidet sich aber dadurch, dass zwei Fenster in den oberen Teil des Adapters 22 gefräst sind. Dadurch entstehen längs des Adapters 22 zwei aus den verbleibenden Mantelsegmenten gebildete Stege 23, 24. Der obere Rand des Adapters 22 bildet einen torusförmigen Ring 25, der auf den Stegen 23, 24 sitzt. Die Länge der Stege 23,24 hängt von der verwendeten Steckerart ab, für die der Adapter 22 verwendet werden soll. Durch die Verlängerung des Adapters 22 mit den beiden Stegen 23, 24 und dem abschliessenden Ring 25 erhält der Kupplungsstecker eine bessere Führung und grössere Stabilität, die besonders bei grösseren Kupplungsausführungen beim Schwenken vorteilhaft ist.

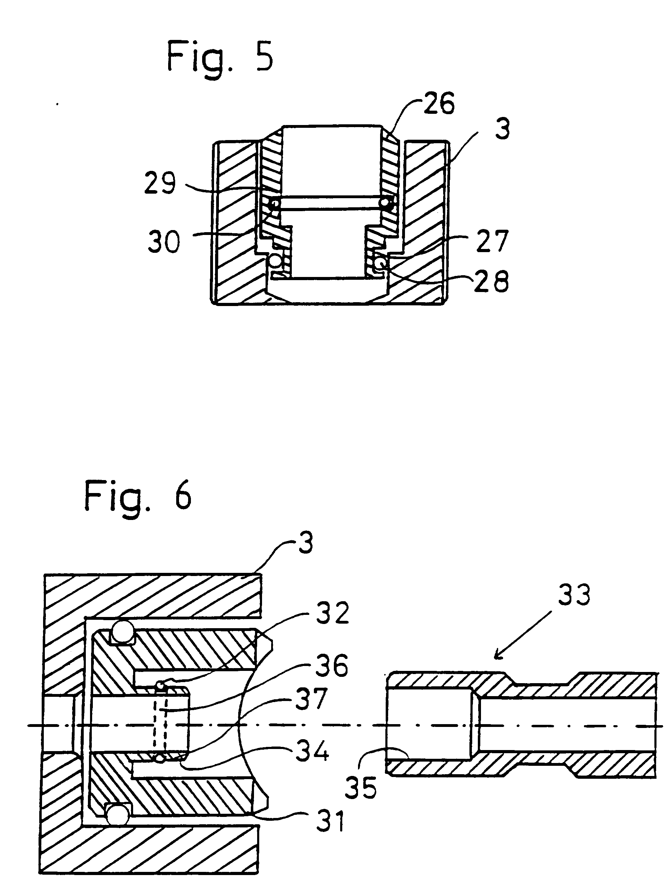

Eine weitere Variante eines Sperrorgans mit Adapter ist in Figur 5 in einer Schnittzeichnung dargestellt. Das zylindrische Sperrorgan 3 weist senkrecht zur Schwenkachse eine Bohrung auf, die dem Aussendurchmesser des einzusetzenden Adapters 26 entspricht. Diese Bohrung ist im unteren Teil über eine Stufe verjüngt. Die Innenseite dieser verjüngten Bohrung dient als Dichtfläche für den einzusetzenden Adapter 26. In den Adapter 26 mit seiner entsprechend der Bohrung stufenförmigen Aussenseite ist aus dem Teil der Aussenseite mit dem kleineren Durchmesser eine Kreisnut 27 ausgenommen. In dieser Kreisnut sitzt ein Dichtungsring 28 zum Abdichten des Adapters 26 im Sperrorgan 3. Gleichzeitig wird der Adapter 26 mit dem Dichtungsring 28 im Sperrorgan 3 festgeklemmt. Das Innere des Adapters 26 ist als Kupplungsbuchse ausgebildet. Im oberen Teil ist deshalb eine Ringnut 29 eingelassen, in der ein Dichtungsring 30 zum Dichten des Kupplungssteckers eingelegt ist.

Die erfindungsgemässe Sicherheitskupplung mit Adapter eignet sich auch für eine besondere Art von Kupplungen, bei denen durch die Formgebung der Kupplungsbuchse und des dazugehörigen Steckers eine Reduktion des Kraftaufwandes, der beim Zusammendrücken von Kupplungsstecker und Kupplungsbuchse zum Lösen der Kupplung erforderlich ist, erreicht wird. Dabei wird die Querschnittsfläche, auf die der innere Druck beim Lösen der Kupplung wirkt, verkleinert, ohne dabei den Durchflussquerschnitt zu verringern. Eine Ausführungsvariante für eine solche Kupplung mit einem Sperrorgan mit Adapter zeigt die Figur 6. Der Adapter 31 weist zwei aneinander anschliessende axiale Bohrungen mit unterschiedlichen Durchmessern auf. Von der Seite der grösseren Bohrung her ist koaxial zu den Bohrungen eine Ringnut 32 um die kleinere Bohrung herum ausgenommen, deren äusserer Durchmesser der grossen Bohrung entspricht. Die Breite und die Tiefe der Ringnut 32 sind so gewählt, dass ein entsprechender Kupplungsstecker 33 passgenau in die Ringnut 32 einsteckbar ist. Der durch die Ringnut 32 und die kleinere Bohrung entstehende Nippel 34 soll möglichst dünnwandig sein, denn der Aussendurchmesser des Nippels 34 bestimmt die wirkende Querschnittsfläche, die ihrerseits mit dem Überdruck im Inneren der Kupplung die Kraft bestimmt, die notwendig ist, um den Stecker 33 in den Adapter 31 gegen den Mediendruck drücken zu können. Die innere, glatte Oberfläche 35 des Steckers 33 bildet eine Dichtfläche. Beim Zusammenstecken der Kupplungselemente wird der Stecker 33 in die Ringnut 32 des Adapters 31 soweit eingesteckt, dass das in einer Kreisnut 36 des Nippels 34 liegende Dichtungselement 37 dichtend gegen die Steckerinnenfläche 35 drückt. Die Aussenseite des Adapters 31 und das Sperrorgan 3 sind gleich geformt, wie die in der Figur 5 beschriebenen entsprechenden Kupplungsteile.

Bei den beschriebenen Ausführungsvarianten eines Adapters befindet sich das Dichtungselement zum Abdichten des Steckers gegenüber dem Adapter jeweils im Adapter und ein Abschnitt des Steckers bildet eine Dichtfäche. Es ist natürlich ohne weiteres möglich, dass die Adapterinnenseite eine Buchse mit einer Dichtfläche bildet, und dass der Stecker eine Nut mit einem Dichtungsring als Dichtelement aufweist.

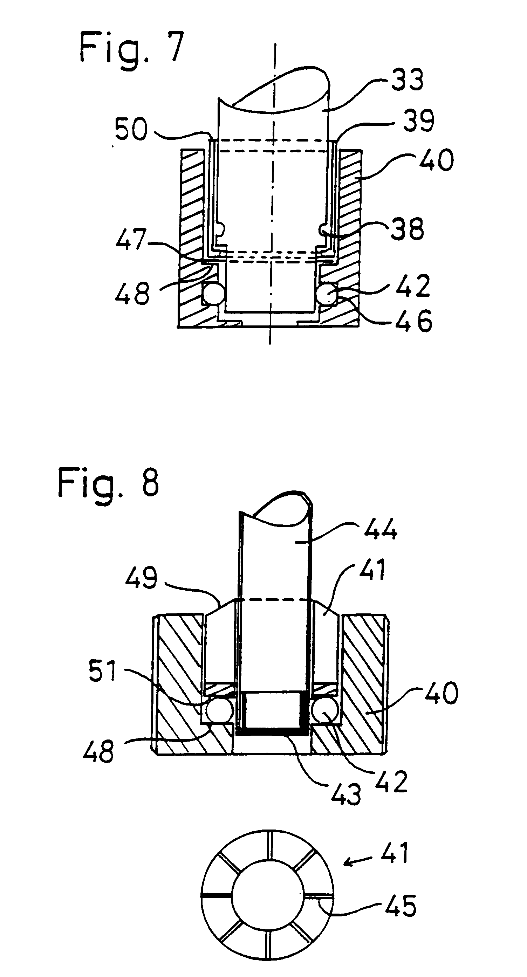

Die vorgängig beschriebenen Varianten von Kupplungen zeigen einen Stecker mit einer Form, die es erlaubt, dass der Stecker nach dem Schwenken in die leitende Lage durch den Mediendruck in eine Ausnehmung des Steckergehäuses gedrückt wird, dort einrastet, und damit den Stecker fixiert. Die Figur 7 zeigt eine Ausführungsvariante eines Adapters, die sich besonders für kurze Stecker, die nicht im Kupplungsgehäuse einrasten können, eignet. Im zylindrischen Sperrorgan 40, das senkrecht zur Schwenkachse eine Bohrung aufweist, befindet sich eine Buchse 39. Diese Buchse 39 wird von einer Wellfeder 47, die auf der Schulter 48 im Sperrorgan 40 aufliegt, nach aussen gedrückt. Dadurch ragt der obere Rand 50 der Buchse 39 aus dem Sperrorgan 40 in die Steckerausnehmung des Kupplungsgehäuses und das Sperrorgan 40 kann somit nicht geschwenkt werden. Beim Einstecken des Kupplungssteckers 33 wird die Buchse 39 soweit in das Sperrorgan 40 gedrückt, dass das Sperrorgan 40 im Kupplungsgehäuse geschwenkt werden kann. Sobald sich das Sperrorgan 40 in der leitenden Position befindet, wird durch den Mediendruck und durch die Wellfeder 47 der Stecker 33 samt der Buchse 39 nach aussen gedrückt. Die Buchse 39 rastet dann in einer Ausnehmung im Kupplungsgehäuse ein und verriegelt so das Sperrorgan 40. Erst durch das Drücken des Steckers 33 gegen den Mediendruck in das Sperrorgan 40 wird die Buchse 39 soweit in das Sperrorgan 40 gedrückt, dass das Sperrorgan 40 ungehindert von der leitenden wieder in die sperrende Position gebracht werden kann. Ein federbelasteter Bügel, der in der Zeichnung nicht gezeigt ist, ist in einer Ausnehmung im Sperrorgan 40 eingelegt. Befindet sich das Sperrorgan das Sperrorgan 40 in der sperrenden Position, so wird dieser Bügel von einer Feder nach aussen gegen die Innenwand des Kupplungsgehäuses gedrückt, und der Stecker 33 kann ungehindert eingesteckt werden. Beim Schwenken des Sperrorgans 40 von der sperrenden Position in die leitende Position wird durch die entsprechende Form des Gehäuses dieser Bügel in die Ausnehmung im Sperrorgan 40 gedrückt und die Schenkel des Bügels greifen dann in die Steckerausnehmung 38 ein. Damit wird der Stecker 33 im Sperrorgan 40 fixiert. Abgedichtet wird der Stecker 33 im Sperrorgan 40 durch einen Dichtungsring 42, der in einer Nut 46 im Sperrorgan 40 eingelegt ist. In einer modifizierten Form des in Figur 7 gezeigten Adapters wird die Wellfeder 47 durch einen Dichtungsring ersetzt. Dieser Dichtungsring hat dann einerseits die Funktion der vorher erwähnten Wellfeder 47, nämlich die Buchse 39 nach aussen zu drücken, und andrerseits umschliesst dieser Dichtungsring den eingesteckten Stecker 33 dichtend. In dieser Ausführung ist dann kein weiteres Dichtungselement zum Abdichten des Steckers notwendig.

In der Figur 8 ist eine Ausführungsvariante eines Adapters gezeigt, bei dem das Schlauchende eines Plastik- oder Gummischlauchs 44 direkt die Funktion des Steckers der erfindungsgemässen Sicherheitskupplung übernimmt. Den Adapter bildet eine Spannzange 41. Diese Spannzange 41 besteht aus einem zylinderförmigen Mantel mit Längsschlitzen 45. Am oberen Ende 49 ist die Spannzange 41 konisch geformt. Die untere Abschlussfläche 51 der Spannzange 41 bildet eine Dichtfläche und liegt mittels des Dichtungsringes 42 dichtend auf der Schulter 48 des Sperrorgans auf. Da der Dichtungsring 42 gleichzeitig als Feder wirkt, wird dadurch die Spannzange 41 nach aussen gedrückt. Das konische Ende der Spannzange 41 greift dadurch in das Kupplungsgehäuse ein. Beim Schwenken des Sperrorgans 40 mit eingestecktem Schlauch 44 wird durch eine entsprechend geformte Ausnehmung im Kupplungsgehäuse der konische Abschluss der Spannzange 41 in das Sperrorgan 40 gedrückt. Gleichzeitig wird durch die konische Form die Spannzange 41 radial zusammengedrückt und umschliesst so fest den Schlauch. Versucht man, an dem Schlauch zu ziehen, bzw. wird der Schlauch durch den Mediendruck nach aussen gedrückt, so wird das konische Ende 49 der Spannzange 41 weiter in die Gehäuseausnehmung gedrückt, und dadurch wird der Schlauch 44 noch fester von der Spannzange 41 umschlossen und gehalten. Wird das Sperrorgan von der leitenden in die sperrende Position gebracht, so wird durch die Federwirkung des Dichtungsringes 42 die Spannzange 41 nach aussen in eine Ausnehmung im Kupplungsgehäuse gedrückt. Dadurch gibt die Spannzange 41 den Schlauch 44 wieder frei und der Schlauch 44 kann aus der Spannzange 41 gezogen werden. Manche Schlaucharten sind für eine Montage, wie sie eben beschrieben wurde, zu weich oder zu instabil. Sie werden vom Dichtungselement 42 oder von der Spannzange 41 deformiert und dichten daher nicht richtig. Solche Schläuche können mit einer Hülse 43 verstärkt werden. Diese Hülse 43 hat einen Aussendurchmesser, der dem Innendurchmesser des Schlauches entspricht. Diese Hülse 43 wird in den Schlauch geschoben und damit erhält das Schlauchende eine genügende Festigkeit, um den Schlauch dichtend mit dem Dichtungselement 42 und mit der Spannzange 41 im Sperrorgan 40 zu halten.

## Patentansprüche

1. Steckbare Sicherheitskupplung für Druckleitungen mit einer Kupplungsdose mit darin schwenkbar gelagertem Sperrorgan (3), welches eine diametrale durchgehende Bohrung aufweist, und darin einsteckbarem Stecker (2) zum drucklosen Kuppeln und Entkuppeln, wobei das Sperrorgan (3) wenigstens in der Leitungslage mittels mindestens eines verschiebbaren Bolzens oder Nockens (67) gegen eine Verschwenkung sicherbar ist, welcher Bolzen oder Nocken (67) in Sperrlage in eine Bohrung (68,69,70) oder Ausnehmung im Sperrorgan (3) eingreift, ferner dass das Sperrorgan (3) eine senkrecht zu seiner Schwenkachse verlaufende, um seine durchgehende Bohrung angeordnete Ausnehmung aufweist, in welche ein Adapter (4) mit durchgehender Bohrung formschlüssig und dichtend eingesetzt ist, wobei dessen Inneres als Steckerbuchse für den einzusteckenden Stecker (2) ausgebildet ist.

2. Steckbare Sicherheitskupplung nach Anspruch 1, dadurch gekennzeichnet, dass die Nocken (67) auf einem Ring (60) sitzen, der anschliessend an das Kupplungsgehäuse (1) gegen das Kupplungsgehäuse (1) hin federbelastet axial verschiebbar angeordnet ist, indem dessen dem Kupplungsgehäuse (1) zugewandter Rand zwei diesen Rand überragende Nocken (67) aufweist, und dass diese Nocken (67) durch entsprechende Ausnehmungen im Kupplungsgehäuse (1) hindurch in um einen Bereich des Umfanges des Sperrorgans (3) verteilt angeordnete radiale Bohrungen (68,69,70) einzugreifen bestimmt sind, wodurch die Nocken (67) je nach Schwenklage des Sperrorgans (3) dieses in der jeweiligen Lage arretieren.

3. Steckbare Sicherheitskupplung nach einem der vorhergehenden Ansprüche, dadurch gekennzeichnet, dass die Ausnehmung im Sperrorgan (3) eine Sackbohrung ist, an deren Boden eine Bohrung mit einem Feingewinde (14) anschliesst und am Rand der Sackbohrung entlang verlaufend ein Dichtungsring (16) eingelegt ist, sowie dass der untere äussere Rand des Adapters (4) angefast ist und so eine Dichtfläche mit diesem Dichtungsring (16) bildet, dass in der durchgehenden Bohrung im Adapter (4) ein Gewindenippel (5) mit durch ihn verlaufendem Imbus-Sechskant sitzt, mittels dessen der Adapter (4) mit dem Sperrorgan (3) verschraubt ist.

4. Steckbare Sicherheitskupplung nach einem der Ansprüche oder 2, dadurch gekennzeichnet, dass die Ausnehmung im Sperrorgan (3) eine stufenförmige Sackbohrung um die durchgehende Bohrung ist, in welche ein Adapter (26) mit entsprechender stufenförmiger Aussenseite eingesetzt ist, wobei in den Teil der Aussenseite des Adapters (26) mit kleinerem Durchmesser eine Kreisnut (27) eingelassen ist, in welcher ein Dichtungsring (28) zum Abdichten und Festklemmen des Adapters (26) im Sperrorgan (3) sitzt.

5. Steckbare Sicherheitskupplung nach einem der vorhergehenden Ansprüche, dadurch gekennzeichnet, dass der Adapter (22) aus dem Sperrorgan (3) herausragt, wobei der herausragende Teil des Adapters (22) aus zwei Stegen (23,24) besteht, die aus in Schwenkrichtung des Sperrorgans (3) einander gegenüberliegenden Mantelsegmenten des Adapters (22) bestehen und oben einen gegenüber der Aussenseite des Adapters (22) auskragenden torusfürmigen Ring (25) tragen, der als Führung für den einzusteckenden Stecker (2) zu wirken bestimmt ist.

6. Steckbare Sicherheitskupplung nach einem der vorhergehenden Ansprüche, dadurch gekennzeichnet, dass im Sperrorgan (3) neben und längs des Adapters (4;22) verlaufend ein federbelasteter Stift (7) in einer Bohrung (8) sitzt, dessen angeschrägter Kopf im entkuppelten Zustand der Kupplung seitlich leicht in das Innere der vom Adapter gebildeten Steckerbuchse und axial in eine Ausnehmung (10) im Gehäuse (1) der Kupplungsdose ragt, derart, dass dieser Stift (7) das Sperrorgan (3) in diesem Zustand verriegelt, wobei die Verriegelung durch das Einstecken des Steckers, welcher dabei den Stift (7) mitnimmt und mit der Sperrorganoberfläche bündig in seine Bohrung (8) drückt, lösbar ist.

7. Steckbare Sicherheitskupplung nach einem der vorhergehenden Ansprüche, dadurch gekennzeichnet, dass der Adapter als Steckerbuchse ausgebildet ist, welcher zwei aneinander anschliessende axiale Bohrungen mit unterschiedlichen Durchmessern aufweist, wobei von der grösseren Bohrung her mit ihrem Durchmesser eine Ringnut (32) um die Bohrung des kleineren Durchmessers herum ausgenommen ist, in welche ein Stecker (33) mittels eines Dichtungselementes (37) dichtend einsteckbar ist.

8. Steckbare Sicherheitskupplung nach einem der vorhergehenden Ansprüche, dadurch gekennzeichnet, dass der Adapter eine Buchse bildet, indem er eine Ringnut (37;29) aufweist, in welche ein Dichtungsring (20;30;37) eingelegt ist, und der zugehörige Stecker (2;33) eine entsprechende Dichtfläche aufweist.

9. Steckbare Sicherheitskupplung nach einem der vorhergehenden Ansprüche, dadurch gekennzeichnet, dass der Adapter eine Buchse bildet, diese eine Dichtfläche aufweist und der zugehörige Stecker aussen eine Ringnut aufweist, in welche ein Dichtungsring eingelegt ist.

10. Steckbare Sicherheitskupplung nach Anspruch 5, dadurch gekennzeichnet, dass der am Adapter auf der in Schwenkrichtung des Einkuppelns liegende Steg (23) ein schmaleres Mantelsegment bildet als der gegenüberliegende Steg (24), wobei dieser schmalere Steg (23) in eingekuppeltem Zustand in eine entsprechend dimensionierte Ausnehmung (13) am Gehäuse (1) der Kupplungsdose eingeschwenkt ist und so den aus dem Sperrorgan (3) ragenden Teil des Adapters (22) stabilisiert.

11. Steckbare Sicherheitskupplung nach einem der Ansprüche 1 oder 2, dadurch gekennzeichnet, dass die Ausnehmung im Sperrorgan (40) eine stufenförmige Sackbohrung um die durchgehende Bohrung ist, in welche eine Buchse (39) eingesetzt ist, diese Buchse (39) federbelastet auf der durch die stufenförmige Sackbohrung gebildeten Schulter (48) im Sperrorgan (40) aufliegt, und dass in den Teil des Sperrorgans (40) mit kleinerem Durchmesser eine Kreisnut (46) eingelassen ist, in welcher ein Dichtungsring (42) zum Abdichten des Sperrorgans (40) gegenüber dem Stecker (33) eingelegt ist.

12. Steckbare Sicherheitskupplung nach einem der Ansprüche 1 oder 2, dadurch gekennzeichnet, dass das Schlauchende eines Schlauches (44) den Stecker der Kupplung bildet und der Adapter eine Spannzange (41) ist und diese Spannzange (41) mittels eines Dichtungsringes (42) dichtend und federnd auf einer Schulter (48) im Sperrorgan (40) aufliegt, wobei das Kupplungsgehäuse innen so geformt ist, dass die Spannzange (41) durch Schwenken des Sperrorganes in Leitungslage weiter in das Sperrorgan gedrückt wird, wodurch der Dichtungsring (42) den Schlauch (44) dichtend umschliesst.

## Claims

1. Plug-in safety coupling for pressure lines with a coupling socket with a blocking member (3), which is pivotably mounted therein, which has a diametrical through bore, and a plug (2) insertable therein for pressureless coupling and uncoupling, which blocking member (3) is lockable against pivoting at least in the flow position by means of at least one displaceable bolt or cam (67), which bolt or cam (67) engages into a bore (68, 69, 70) or a recess in the blocking member (3), furthermore that the blocking member (3) has a recess arranged at right angles to its pivotational axis and is arranged about its through bore, into which an adapter (4) with through bore is inserted form-lockingly and sealingly, whereby its interior is shaped as coupling sleeve for the plug (2), which is to be inserted.

2. Plug-in safety coupling according to claim 1, characterised thereby that the cams (67) are seated on a ring (60), which in turn is arranged at the coupling housing (1) spring loaded axially displaceably against the coupling housing (1), in that the edge facing towards the coupling housing (1) has two cams (67) projecting beyond this edge, and that these cams (67) are intended for engaging through suitable recesses in the coupling housing (1) into radial bores (68, 69, 70), which are arranged distributed in a zone of the circumference of the blocking member (3), whereby the cams (67) arrest the blocking member (3) in the respective position depending on the pivotational position of the blocking member (3).

3. Plug-in safety coupling according to one of the preceding claims, characterised thereby that the recess in the blocking member (3) is a blind bore, to the floor of which a bore with a fine thread (14) joins on and a sealing ring (16) is inserted along the edge of the blind bore, as well as that the lower outer edge of the adapter (4) is contacted, and thus a sealing surface is formed with this sealing ring (60), but in the through bore in the adapter (4) a threaded nipple (5), with a socket head nut passing through it, is seated, by means of which the adapter (4) is screw connected to the blocking member (3).

4. Plug-in safety coupling according to one or more of the preceding claims, characterised thereby that the recess in the blocking member (3) is a step shaped blind bore about the through bore, into which an adapter (26) with suitable step shaped outer edge is inserted, whereby a circular groove (27) with smaller diameter is cut in the part of the outside of the adapter (26); in which groove a sealing ring (28) is seated for sealing off and clamping of the adapter (26) in the blocking member (3).

5. Plug-in safety coupling according to any one of the preceding claims, characterised thereby that the adapter (22) projects out of the blocking member (3), whereby the projecting part of the adapter (22) consists of two webs (23, 24), which consist of jacket segments of the adapter (22) located oppositely in the pivotational direction of the blocking member (3) and on top carry a torus shaped ring (25) opposite the outside of the adapter (22), which ring is intended to act as guide for the plug (2) to be inserted.

6. Plug-in safety coupling according to any one of the preceding claims, characterised thereby that a spring loaded pin (7) extending next to and along the adapter (4; 22) is seated in a bore (8) in the blocking member (3), the bevelled head of which pin in the decoupled condition of the coupling projects slightly into the interior of the plug sleeve formed by the adapter and projects axially into a recess (10) in the housing (1) of the coupling socket, such that this pin (7) locks the blocking member (3) in this position, whereby the locking is releasable by the insertion of the plug, which thereby takes the pin (7) along and therewith presses the blocking member surface snugly into its bore (8).

7. Plug-in safety coupling according to any one of the preceding claims, characterised thereby that the adapter is shaped as plug sleeve, which has two axial bores with different diameters joining on each other, whereby an annular groove (32) is recessed from the larger bore about the bore of smaller diameter, into which groove a plug (33) is insertable sealingly by means of a sealing element (37).

8. Plug-in safety coupling according to any one of the preceding claims, characterised thereby that a sleeve forms the adapter, in that it has an annular groove (37; 29), into which a sealing ring (20; 30; 37) is inserted, and the associated plug (2; 33) has a corresponding sealing surface.

9. Plug-in safety coupling according to any one of the preceding claims, characterised thereby that a sleeve forms the adapter, which has a sealing surface and the associated plug has an annular groove on its outside, into which a sealing ring is inserted.

10. Plug-in safety coupling according to claim 5, characterised thereby that the web (23) located at the adapter in the pivotational direction of the coupling, forms a smaller jacket segment than the opposite web (24), whereby this smaller web (23) in the coupled condition is pivoted into a suitably dimensioned recess (13) at the housing (1) of the coupling socket and thus stabilises the part of the adapter (22) projecting out of the blocking member (3).

11. Plug-in safety coupling according to claim 1 or claim 2, characterised thereby that the recess in the blocking member (40) is a step shaped blind bore around the through bore into which a sleeve (39) is inserted, this sleeve (39) is spring loaded on the shoulder (48) formed by the step shaped blind bore in the blocking member (40), and that in the part of the blocking member (14) with smaller diameter a circular groove (46) is cut, into which groove which a sealing ring (42) is inserted for sealing off the blocking member (40) relative to the plug (33).

12. Plug-in safety coupling according to claim 1 or claim 2, characterised thereby that the tube end of a tube (44) forms the plug of the coupling and a tension clamp (41) is the adapter, and, by means of a sealing ring (42), this tension clamp (41) abuts sealingly and spring loaded on a shoulder (48) in the blocking member (40), whereby the coupling housing is shaped internally such that by pivotation of the blocking member into the flow position the tension clamp (41) is pressed further into the blocking member, whereby the sealing ring (42) sealingly surrounds the tube (44).

## Revendications

1. Raccord de sécurité enfichable pour conduites sous pression, comportant une boîte de raccordement, dans laquelle se trouve un organe de blocage (3), logé pivotant et présentant un trou diamétralement traversant, ainsi qu'une fiche (2) qui y est enfichable et destinée à l'accouplement et au désaccouplement sans pression, l'organe de blocage (3) pouvant être bloqué en rotation au moins dans la position conductrice au moyen d'au moins une tige ou d'un doigt (67) mobile, cette tige ou ce doigt (67) pénétrant en position de blocage dans un trou (68, 69, 70) ou évidement pratiqué dans l'organe de blocage (3), cependant que l'organe de blocage (3) présente un évidement disposé perpendiculairement à son axe de pivotement et entourant son trou traversant, cet évidement recevant d'une manière jointive et géométriquement solidaire un adaptateur (4) à trou traversant, l'intérieur de l'adaptateur constituant une douille d'enfichage pour la fiche (2).

2. Raccord de sécurité enfichable suivant la revendication 1, caractérisé en ce que les doigts (67) sont placés sur une bague (60), qui est disposée ensuite sur le boîtier de raccordement (1) et mobile axialement contre celui-ci sous l'action d'un ressort, en ce que le bord de cette bague faisant face au boîtier de raccordement (1) présente deux doigts (67) dépassant ce bord et que ces doigts (67) sont destinés à pénétrer, à travers des évidements correspondants du boîtier de raccordement (1), dans des trous (68, 69, 70) radiaux répartis sur un segment du pourtour de l'organe de blocage (3), de sorte que, suivant la position de pivotement de l'organe de blocage (3), les doigts (67) bloquent ce dernier dans la position correspondante.

3. Raccord de sécurité enfichable suivant une des revendications précédentes, caractérisé en ce que l'évidement pratiqué dans l'organe de blocage (3) est un trou borgne, au fond duquel se raccorde un trou à taraudage fin (14) et le long du bord duquel est insérée une bague d'étanchéité (16), cependant que le bord extérieur inférieur de l'adaptateur (4) est chanfreiné et forme ainsi avec cette bague d'étanchéité (16) une surface d'étanchéité, et que, dans le trou traversant de l'adaptateur (4), se trouve un raccord fileté (5), traversé par un six-pans creux, au moyen duquel l'adaptateur (4) est vissé à l'organe de blocage (3).

4. Raccord de sécurité enfichable suivant une des revendications 1 ou 2, caractérisé en ce que l'évidement pratiqué dans l'organe de blocage (3) constitue un trou borgne étagé entourant le trou traversant, dans lequel est introduit un adaptateur (26), comportant une surface extérieure étagée correspondante, cependant que, dans la partie de la surface extérieure de l'adaptateur (26) qui est de plus petit diamètre, il est pratiqué une rainure annulaire (27), dans laquelle se trouve un joint d'étanchéité (28), destiné à assurer l'étanchéité de l'adaptateur (26) dans l'organe de blocage (3) et à l'y caler.

5. Raccord de sécurité enfichable suivant une des revendications précédentes, caractérisé en ce que l'adaptateur (22) dépasse de l'organe de blocage (3), la partie dépassante de l'adaptateur (22) étant formée de deux pontets (23, 24), qui sont constitués par des secteurs enveloppants de l'adaptateur (22), opposés l'un à l'autre dans le sens de pivotement de l'organe de blocage (3) et portent dans le haut une bague torique (25), formant rebord par rapport à la surface extérieure de l'adaptateur (22) et destinée à guider la fiche (2) à enficher.

6. Raccord de sécurité enfichable suivant une des revendications précédentes, caractérisé en ce que dans l'organe de blocage (3) il est logé à côté de l'adaptateur (4; 22) et le long de celui-ci une tige (7) à ressort dans un trou (8), cependant que, dans l'état désaccouplé du raccord, la tête chanfreinée de cette tige dépasse légèrement latéralement dans l'intérieur de la douille d'enfichage formée par l'adaptateur et axialement dans un évidement (10) du boîtier (1) de la boîte de raccordement, de sorte que cette tige (7) verrouille dans cet état l'organe de blocage (3), cependant que le verrouillage est déverrouillable par l'enfichage de la fiche, qui entraîne alors la tige (7) et appuie sans jeu, avec la surface de l'organe de blocage, dans son trou (8).

7. Raccord de sécurité enfichable suivant une des revendications précédentes, caractérisé en ce que l'adaptateur a la forme d'une douille d'enfichage, qui présente deux trous de diamètres différents et se raccordant axialement l'un à l'autre, cependant qu'à partir du plus grand trou, une rainure annulaire (32) est pratiquée avec son diamètre autour du trou de plus petit diamètre, dans lequel une fiche (33) peut s'enficher jointivement au moyen d'un élément d'étanchéité (37).

8. Raccord de sécurité enfichable suivant une des revendications précédentes, caractérisé en ce que l'adaptateur a la forme d'une douille, du fait qu'il présente une rainure annulaire (37; 29), dans laquelle est insérée une bague d'étanchéité (20; 30; 37) et que la fiche correspondante (2; 33) présente une surface d'étanchéité correspondante.

9. Raccord de sécurité enfichable suivant une des revendications précédentes, caractérisé en ce que l'adaptateur a la forme d'une douille, que celle-ci présente une surface d'étanchéité et que la fiche correspondante présente extérieurement une rainure annulaire, dans laquelle une bague d'étanchéité est insérée.

10. Raccord enfichable de sécurité suivant la revendication 5, caractérisé en ce que le pontet (23) disposé dans le sens de pivotement du mouvement d'accouplement forme un secteur enveloppant plus étroit que le pontet (24) qui lui fait face, cependant que ce pontet plus étroit (23) a pivoté, à l'état d'accouplement, dans un évidement (13) dimensionné en conséquence sur le boîtier (1) de la boîte de raccordement, stabilisant ainsi la partie de l'adaptateur (22) qui dépasse de l'organe de blocage (3).

11. Raccord enfichable de sécurité suivant une des revendications 1 et 2, caractérisé en ce que l'évidement pratiqué dans l'organe de blocage (40) est un trou borgne étagé, disposé autour du trou traversant, dans lequel est insérée une douille (39), qui, soumise à l'action d'un ressort, repose sur l'épaulement (48), formé par le trou borgne étagé dans l'organe de blocage (40), et que dans la partie de l'organe de blocage (40) de plus petit diamètre il est pratiqué une rainure circulaire (46), recevant une bague d'étanchéité (42) destinée à assurer l'étanchéité de l'organe de blocage (40) par rapport à la fiche (33).

12. Raccord enfichable de sécurité suivant une des revendications 1 et 2, caractérisé en ce que l'extrémité d'un tuyau (44) forme la fiche du raccord de sécurité et que l'adaptateur est une pince de serrage (41), cependant que cette pince (41) repose, d'une manière jointive et élastique, au moyen d'une bague d'étanchéité (42), sur un épaulement (48) pratiqué dans l'organe de blocage (40), le boîtier de raccordement étant formé intérieurement de manière à ce que la pince de serrage (41) soit appuyée de nouveau dans l'organe de blocage, par le pivotement de ce dernier, dans la position conductrice, de sorte que la bague d'étanchéité (42) entoure jointivement le tuyau (44).
